Europäisches Patentamt

European Patent Office

Office européen des brevets

(11) Publication number:

**0 061 865**

**B1**

## EUROPEAN PATENT SPECIFICATION

(45) Date of publication of patent specification: **26.06.85**

(21) Application number: **82301354.5**

(22) Date of filing: **17.03.82**

(51) Int. Cl.⁴: **A 01 G 25/00** // C02F1/00

(54) Irrigation method and apparatus.

(30) Priority: **18.03.81 JP 37785/81**

(43) Date of publication of application:
**06.10.82 Bulletin 82/40**

(45) Publication of the grant of the patent:
**26.06.85 Bulletin 85/26**

(84) Designated Contracting States:
**AT BE CH DE FR GB IT LI LU NL SE**

(56) References cited:
**GB-A-1 443 517**
**US-A-3 482 701**

(73) Proprietor: **Tsuruta, Yasuo**
**22-2, Sanno 4-chome Ota-ku**
**Tokyo (JP)**

(72) Inventor: **Tsuruta, Yasuo**
**22-2, Sanno 4-chome Ota-ku**
**Tokyo (JP)**

(74) Representative: **Gilmour, David Cedric Franklyn**
**et al**
**POTTS, KERR & CO. 15 Hamilton Square**
**Birkenhead Merseyside L41 6BR (GB)**

Courier Press, Leamington Spa, England.

## Description

The present invention relates to a method of irrigation and an irrigation apparatus whereby salt may be removed from saline irrigation water.

For agricultural irrigation the so-called "basin" irrigation has been used generally but it is not entirely suitable for agriculture in dry land.

Recently, sprinkler and drip irrigation systems are being used in developing farms in dry land although there are problems, however, pertaining to salt damage as well as sterilisation of farmlands by salt.

It is an object of the present invention to concentrate the poisonous salt contained in irrigation water nearby the opening of an irrigation emitter to prepare the moistened area in the soil with the water free of salt contained in irrigation water.

The fact that an ideal moistened area in pot-like form can be prepared by emitting a small amount of water constantly (as shown in the chart as well as photograph) in sandy cultivation bed is shown by PCT/JP79/00111 (EP—A—0036021).

However, there are often cases in which the poisonous salt cannot be concentrated substantly according to the nature of soil and the amount of water emitted. This is the reason that this invention has been developed as a countermeasure.

According to the present invention there is provided a method of irrigation comprising locating at least one vessel containing a water permeable filler material on a soil surface with said filler material in contact with the soil through an opening in a lower part of said vessel, supplying saline irrigation water at a constant rate from a constant water supply means to said filler material so that the water permeable filler material absorbs water from the constant water supply means and allows water to be thereby transmitted to the soil in contact with the opening of the vessel; characterised by locating salt absorbing material in the soil in contact with the filler material in the vessel located thereover and by means of the salt absorbing material removing salt from the saline irrigation water as it passes into the soil.

Also according to the present invention there is provided irrigation apparatus comprising at least one water distribution arrangement and water supply means for supplying water at a constant rate from a constant water supply means to the interior of said distribution arrangement via ducting means, said distribution arrangement comprising a housing or vessel containing water permeable filler material and having an opening in a lower region to permit passage of water from said filler material to the soil; characterised in that salt absorbing material is located directly beneath said filler material such that water passes from said filler material through the salt absorbing material into the soil and salt is thereby removed.

The invention will be described further, by way of example, with reference to the accompanying drawings, in which:—

Fig. 1 is a schematic sectional view of an irrigation device for use in desalinisation irrigation;

Fig. 2 is a view corresponding to that of Fig. 1 but wherein the irrigation device is modified in that the water permeable filler extends below the opening of the emitter housing; and

Fig. 3 is a view corresponding to that of Fig. 1 but wherein the device is modified in that part of the water permeable filler is replaced with rough grain material.

In the drawings an irrigation device is illustrated functioning as distribution means for distributing water which may be supplied with water in the manner such as described in copending EP—A—0036021.

The water distribution means of "emitter" comprises a housing or casing 1 having a water supply duct leading to water supply reservoir in the form of an enlargement or tank 2 with a large, lower opening of the casing being supported on soil 5. an upper closable opening also being provided (not referenced nor shown in detail). Within casing 1 and extending to the level of the soil 5, are water permeable filler materials 3 such as glass wool. Beneath the casing 1 is arranged salt absorbing material 4 such as activated carbon or particles of calcite or quartz gravel or activated alumina and the interior of the casing 1 communicates with the soil 5 only through said material 4.

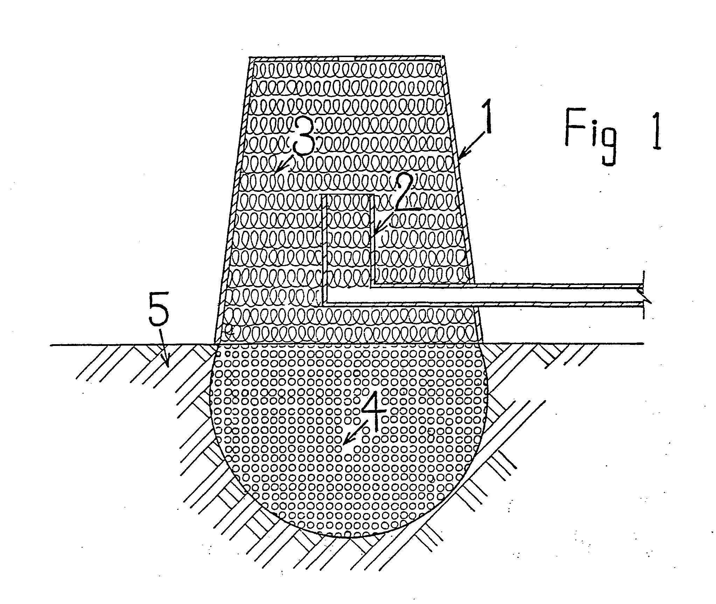

As shown in the drawings, by the application of the salt absorbing material such as the activated carbon or particles of calcite (hereinafter described simply as absorbent or absorbing material 4) to the soil in contact with the emitting opening of emitter in Fig. 1 and the stimulation by the continuous emission of water homogeneously in quite small amount from the emitter, it is possible to prepare the soil free of salt by the removal of salt contained in irrigation water.

The irrigation water (hereafter described simply as saline water) containing salt which is supplied into the water tank 2 embodied within the outer vessel or casing of emitter of Fig. 1 (hereafter described as the casing) in use is absorbed into the water permeable fillers 3 and infiltrates uniformly into the fillers 3 within the casing 1, therefore, in the soil in contact with the vessel, the water contained in the fillers 3 is kept in homogeneous condition. Therefore, the amount of water emitted per unit area into the soil can be smaller in comparison with conventional irrigation methods. Moreover, differing from conventional irrigation methods, it is possible to effect irrigation day and night without stop during cultivation, so that the water irrigated per unit hour becomes quite small.

For example, in case of corn in the growing stage, 2 litres of irrigation water required per day (advised by Dr. N. A. Makchmob) can be obtained by the continuous irrigation of 0.023 cm³/sec.

It is clearly confirmed by experiments that this invention can achieve such continuous irrigation with extremely small amounts of water per unit hour.

In an example when the supply of water was carried out by employing a 6 cm diameter emitter of the invention, the amount of saline water supplied to the absorbing material 4 on the contacting surface with the vessel was extremely small amount of 0.0008 cm³/sec/cm² and keeping the absorbing materials 4 in unsaturated condition, the saline water was conveyed toward the soil, which was in moistened condition. Therefore, the absorbing power of absorbing materials 4 can be stimulated and the prepared moistened area within the soil 5 can be composed of fresh water.

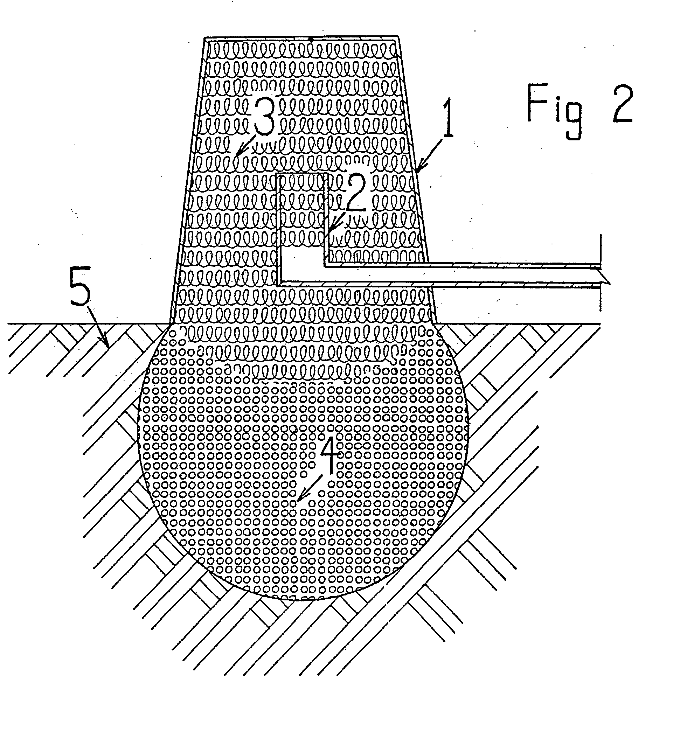

In Fig. 2 there is illustrated a modified arrangement to be used in a case when it is difficult to emit the water extensively from the emitter owing to the roughness of absorbing materials and wherein it is possible to make extensive irrigation by extruding or extending the fillers 3 from the opening of emitter so that such extend therebelow.

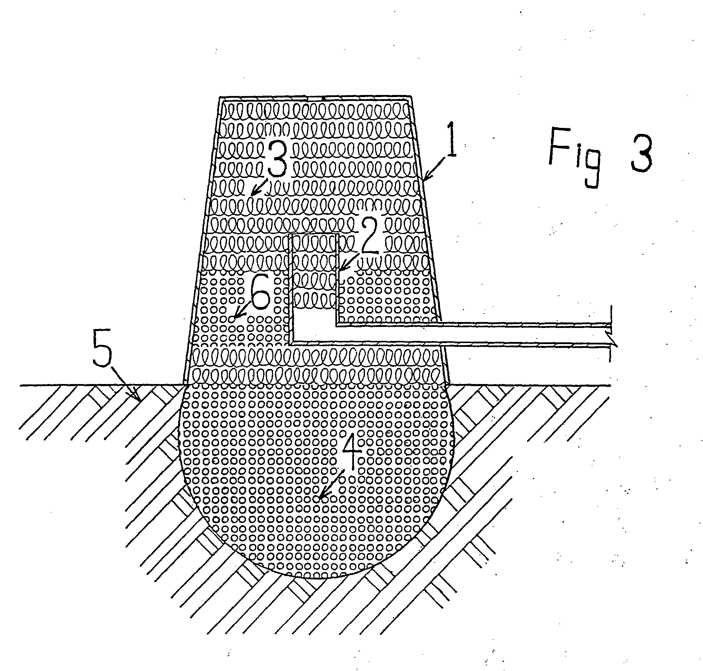

In order to increase the amount of saline water flowing through the emitter when required, for example, for the irrigation of trees when the saline water passes through the fillers 3 undergoing "clayey" resistance which is a frequently occurring problem, it is possible to overcome such problem by replacing part of fillers 3 with rough grain or granular materials 6 such as gravels of coarse sand as illustrated in the modification of Fig. 3.

The amount of water emitted from the emitter is calculated from the following formula, namely;

$$0.023 \text{ cm}^3/\text{sec (40. 12 line)} \div \pi(6 \text{ cm}/2)^2$$
$$= 0.0008 \text{ cm}^3/\text{sec/cm}^2.$$

bottom area of emitter.

## Claims

1. A method of irrigation comprising locating at least one vessel (1) containing a water permeable filler material (3) on a soil surface (5) with said filler material (3) in contact with the soil (5) through an opening in a lower part of said vessel (1), supplying saline irrigation water at a constant rate from a constant water supply means (2) to said filler material (3) so that the water permeable filler material (3) absorbs water from the constant water supply means and allows water to be thereby transmitted to the soil (5) in contact with the opening of the vessel (1); characterised by locating salt absorbing material (4) in the soil (5) in contact with the filler material (3) in the vessel (1) located thereover and by means of the salt absorbing material (4) removing salt from the saline irrigation water as it passes into the soil (5).

2. Irrigation apparatus comprising at least one water distibution arrangement and water supply means for supplying water at a constant rate from a constant water supply means (2) to the interior of said distribution arrangement via ducting means, said distribution arrangement comprising a housing or vessel (1) containing water permeable filler material (3) and having an opening in a lower region to permit passage of water from said filler material (3) to the soil (5); characterised in that salt absorbing material (4) is located directly beneath said filler material (3) such that water passes from said filler material (3) through the salt absorbing material (4) into the soil (5) and salt is thereby removed.

3. Apparatus as claimed in claim 2, characterised in that a part of the water permeable filler is composed of granular material (6).

4. Apparatus as claimed in claim 2, characterised in that a portion of the water permeable filler material (3) extends outwardly of the vessel (1) into the salt absorbing material (4).

5. Apparatus as claimed in any of claims 2 to 4, characterised in that the salt absorbing material (4) is activated carbon or particles of calcite or quartz gravel or activated alumina.

## Revendications

1. Un procédé d'irrigation consistant à placer au moins un récipient (1) contenant une matière de charge perméable à l'eau (3) sur une surface de sol (5), ladite matière de charge (3) étant en contact avec le sol (5) au travers d'une ouverture ménagée dans une partie inférieure dudit récipient (1), en fournissant de l'eau saline d'irrigation à un débit constant depuis une source d'alimentation constante en eau (2) à la matière de charge (3) de manière que la matière de charge perméable à l'eau (3) absorbe de l'eau provenant de la source d'alimentation constante en eau et permette à l'eau d'être ainsi transmise au sol (5) en contact avec l'ouverture du récipient (1), caractérisé en ce qu'on place la matière d'absorption de sel (4) dans le sol (5) en contact avec la matière de charge (3) située dans le récipient (1) placé au-dessus et, au moyen de la matière d'absorption de sel (4), on enlève le sel de l'eau saline d'irrigation quand elle pénètre dans le sol (5).

2. Appareil d'irrigation comprenant au moins un dispositif de distribution d'eau et une source d'alimentation en eau pour fournir de l'eau à un débit constant depuis un moyen d'alimentation constant en eau (2) jusqu'à l'intérieur dudit dispositif de distribution par l'intermédiaire d'un conduit, ledit dispositif de distribution comprenant un carter ou récipient (1) contenant va matière de charge perméable à l'eau (3) et pourvu d'une ouverture dans une zone inférieure afin de permettre un passage de l'eau de ladite matière de charge (3) vers le sol (5), caractérisé en ce qu'une matière d'absorption de sel (4) est placée directement en dessous de ladite matière de charge (3) de façon que de l'eau s'écoule de ladite matière de charge (3) au travers de la matière d'absorption de sel (4) jusque dans le sol (5) et que du sel soit ainsi enlevé.

3. Appareil comme revendiqué dans la revendication 2, caractérisé en ce qu'une partie de la charge perméable à l'eau est composée d'une matière granuleuse (6).

4. Appareil comme revendiqué dans la revendication 2, caractérisé en ce qu'une partie de la matière de charge perméable à l'eau (3) s'étend vers l'extérieur du récipient (1) jusque dans la matière d'absorption de sel (4).

5. Appareil comme revendiqué dans une quelconque des revendications 2 à 4, caractérisé en ce que la matière d'absorption de sel (4) est du carbone activé ou des particules de calcite ou du gravier de quartz ou de l'alumine activée.

**Patentansprüche**

1. Verfahren zur Bewässerung, bei dem zumindest eine Behälter (1) mit einem wasserdurchlässigen Füllstoff auf die Bodenoberfläche (5) gesetzt wird, wobei der Füllstoff über eine Öffnung im unteren Teil dieses Behälters in Berührung mit dem Boden ist, und bei dem salzhaltiges Wasser zur Bewässerung mit konstanter Flußrate von Festen Wasserversorgungseinrichtungen (2) zum Füllstoff geleitet wird, so daß der wasserdurchlässige Füllstoff Wasser aus den Wasserversorgungseinrichtungen absorbiert und dadurch den Durchfluß von Wasser zu dem in Berührung mit der Öffnung des Behälters stehenden Boden gestattet, dadurch gekennzeichnet, daß Salz-absorbierendes Material (4) im Boden Postioniert wird, das in Berührung mit dem Füllstoff (3) im Behälter (1) steht, der darüber angeordnet ist, und daß durch das Salzabsorbierende Material das Salz aus dem salzhaltigen Wasser zur Bewässerung entfernt wird, bevor es in den Boden (5) gelangt.

2. Bewässerrungsvorrichtung mit zumindest einer Wasserverteileinrichtung und Wasserzuführreinrichtungen zur Versorgung mit Wasser unter eine konstanten Zuflußrate von festen Wasserversorgungseinrichtungen (2) in das Innere der Verteileranordnung über Leitungseinrichtungen, wobei diese Verteileranordnung mit einem Gehäuse oder Behälter (1) versehen ist, in dem sich wasserdurchlässiger Füllstoff befindet und das in seinem unteren Teil eine Öffnung aufweist, durch die Wasser von dem Füllstoff in die Erde austreten kann, dadurch gekennzeichnet, daß Salz-absorbierendes Material (4) unmittelbar unterhalb des Füllstoffes (3) angeordnet ist, derart daß das Wasser vom Füllstoff (3) durch das Salz-absorbierende Material (4) in den Boden (5) gelangt und das Salz dabei entfernt wird.

3. Vorrichtung nach Anspruch 2, dadurch gekennzeichnat, daß ein Teil des wasserdurchlässigen Füllstoffs aus Granulatmaterial besteht.

4. Vorrichtung nach Anspruch 2, dadurch gekennzeichnet, daß ein Teil des wasserdurchlässigen Füllstoffs (3) sich aus dem Behälter (1) heraus in das Salz absorbierende Material (4) hinein erstreckt.

5. Vorrichtung nach Anspruch 2 bis 4, dadurch gekennzeichnet, daß Salz-absorbierende Material (4) entweder Aktivkohle oder Calcidteilchen oder Quarzkies oder aktiviertes Aluminiumoxid ist.

Fig 1

Fig 2

Fig 3